# EUROPÄISCHE PATENTSCHRIFT

(11) **EP 2 687 827 B1**
(45) Veröffentlichungstag und Bekanntmachung des Hinweises auf die Patenterteilung: **10.05.2023**
(21) Anmeldenummer: 13003422.6
(22) Anmeldetag: 08.07.2013
(51) Int. Cl.: G01F 1/56, G01F 1/58

(54) **Magnetisch-induktives Durchflussmessgerät**
Magnetic-inductive flow measuring apparatus
Débitmètre à induction magnétique

(30) Priorität: 19.07.2012 DE 102012014266
(43) Veröffentlichungstag der Anmeldung: 22.01.2014
(73) Patentinhaber: Krohne AG, 4019 Basel (CH)
(72) Erfinder: van Willigen, Arnoud, 2901 KC Capelle a/d Ijssel (NL); Pelayo, J.C. González, 4194 TX Meteren (NL); Paul, Christian, 3069 HP Rotterdam (NL)
(74) Vertreter: Gesthuysen Patentanwälte

(56) Entgegenhaltungen:
- EP-B1- 0 069 456
- US-A- 4 409 846
- US-A- 4 736 635
- US-A- 4 795 267
- US-A1- 2008 060 447

## Beschreibung

Die Erfindung betrifft ein magnetisch-induktives Durchflussmessgerät mit mindestens einem Messrohr, wobei das Messrohr mindestens einen Messabschnitt aufweist, mit mindestens einer Magnetfelderzeugungseinrichtung zum Erzeugen eines Magnetfeldes im Messabschnitt des Messrohres, und mit wenigstens zwei im Messabschnitt des Messrohres angeordneten Elektroden zur Erfassung einer Messspannung, wobei die Magnetfelderzeugungseinrichtung mindestens eine vorzugsweise außerhalb des Messabschnitts des Messrohres angeordnete Magnetspule mit einem Spulenkern aufweist, wobei der Spulenkern der Magnetspule bzw. die Spulenkerne der Magnetspulen in Bezug auf den magnetischen Fluss mit mindestens zwei Jochelementen bzw. die Spulenkerne der Magnetspulen mit mindestens jeweils zwei Jochelementen kontaktiert ist bzw. sind und dass die Jochelemente zumindest teilweise den Messabschnitt des Messrohres begrenzen,

Für die Durchflussmessung mit einem magnetisch-induktiven Durchflussmessgerät wird ein Messrohr vorzugsweise aus einem nichtmagnetischen Werkstoff, beispielsweise aus Kunststoff oder einem nichtmagnetischen Metall verwendet, das im Bereich eines Messabschnitts von dem Messmedium bzw. dem Messfluid - z. B. einem Gas, einer Flüssigkeit oder einer Mischung aus einer Flüssigkeit und darin befindlichen Feststoffen - elektrisch von dem Messfluid isoliert ist. Gemäß dem Stand der Technik durchsetzt im Betrieb ein von einer Magnetfelderzeugungsvorrichtung erzeugtes Magnetfeld das Messrohr im Messabschnitt zumindest teilweise im Wesentlichen senkrecht zur Strömungsrichtung des Messmediums. Weist das Messmedium eine elektrische Mindestleitfähigkeit auf, so werden während des Strömens des Mediums dessen Ladungsträger durch das Magnetfeld abgelenkt. An senkrecht zum Magnetfeld und zur Strömungsrichtung angeordneten Elektroden, die entweder galvanisch oder kapazitiv mit dem Messmedium gekoppelt sind, entsteht durch die Ladungstrennung eine elektrische Potentialdifferenz, die mit einem Messgerät erfasst und als Messspannung ausgewertet wird. Da die abgreifbare Messspannung proportional zur Strömungsgeschwindigkeit der mit dem Messmedium bewegten Ladungsträger ist, kann aus der abgreifbaren Messspannung auf die Strömungsgeschwindigkeit und aus der Strömungsgeschwindigkeit dann auf den Durchfluss im Messrohr geschlossen werden.

Die Magnetfelderzeugungsvorrichtung besteht im Stand der Technik zumeist aus mindestens einer Magnetspule mit einem Spulenkern und aus zwei einander diametral gegenüberliegenden Polschuhen, von denen wenigstens einer magnetisch leitend mit der Magnetspule bzw. dem Spulenkern der Magnetspule verbunden ist. Dabei wird durch die Bestromung der Magnetspule bzw. der Magnetspulen in der Regel ein alternierendes Magnetfeld im Messabschnitt des Messrohrs erzeugt.

Die Höhe der an den Elektroden abgreifbaren Messspannung ist insbesondere abhängig von der Feldstärke des einwirkenden Magnetfeldes. Daher werden im Stand der Technik Maßnahmen getroffen, um die Feldstärke des einwirkenden Magnetfeldes, aber auch um die Homogenität des einwirkenden Magnetfeldes zu erhöhen.

Ein magnetisch-induktive Durchflussmessgerät ist aus einer deutschen Offenlegungsschrift bekannt, nämlich aus der DE 10 2006 060 442 A1. Bei diesem bekannten magnetisch-induktiven Durchflussmessgerät ist die Magnetfelderzeugungseinrichtung zweiteilig ausgeführt, sie besteht nämlich aus zwei ineinander steckbaren Modulen, die jeweils über eine Magnetspule verfügen. Die Module werden für die Messung klemmend an der Außenwand des Messrohres angebracht, und das Messrohr weist in dem von den Modulen erfassten Messabschnitt eine abgeflachte Form auf. Die gesamte Magnetfelderzeugungseinrichtung befindet sich also bei dem bekannten magnetisch-induktiven Durchflussmessgerät außerhalb des Messrohres.

Für die Ausgestaltung von magnetisch-induktiven Durchflussmessgeräten sind im Allgemeinen zwei unterschiedliche Bedingungen zu erfüllen bzw. geht das Streben dahin, entsprechende Optimierungen zu erzielen. Zum einen ist dies die Erhöhung der Messgenauigkeit, wozu das obige Vorgehen zur Erhöhung der Feldstärke des Magnetfelds oder auch die Optimierung der Form des Magnetfeldes innerhalb des Messabschnitts gehören. Zum anderen ist dies die äußere Dimensionierung des Messgerätes. Da Durchflussmessgeräte in Prozessanlagen zur Anwendung kommen, bei denen häufig Platzmangel herrscht, ist es vorteilhaft, wenn das Messgerät selbst möglichst klein bzw. tunlichst kompakt ist.

Die US 4 409 846 A zeigt ein magnetisch-induktives Durchflussmessgerät mit einem in einem Spritzgussverfahren hergestellten Messrohr. Das Messrohr weist hierbei einen Strömungskanal mit einem Einströmabschnitt, einem Messabschnitt und einem Ausströmabschnitt auf. Zudem weist das magnetisch-induktive Durchflussmessgerät eine Magnetfelderzeugungseinrichtung mit Magnetspulen, Spulenkernen, Jochelementen und einer alles umrandenden Magnetfeldführung auf. Die Jochelemente sind zum Strömungskanal hin ausgerichtet. Zudem sind die Elemente der Magnetfelderzeugungseinrichtung in das Messrohr eingespritzt und werden durch den Spritzguss gehalten.

Aus der Druckschrift US 2008/060447 A ist ein magnetisch-induktives Durchflussmessgerät mit einem inneren Messrohr und einem äußeren Messrohr bekannt, wobei die Magnetfelderzeugungseinrichtung in dem Zwischenraum zwischen dem inneren Messrohr und dem äußeren Messrohr angeordnet ist.

Der Erfindung liegt die Aufgabe zugrunde, ein magnetisch-induktives Durchflussmessgerät anzugeben, bei dem konstruktiv die Messgenauigkeit unterstützt wird und das sich durch einen möglichst geringen Bauraum auszeichnet.

Das erfindungsgemäße magnetisch-induktive Durchflussmessgerät, bei dem die zuvor hergeleitete Aufgabe gelöst ist, ist zunächst und im Wesentlichen dadurch gekennzeichnet, dass das Messrohr im Bereich des Messabschnitts mit einer Querschnittsverengung ausgeführt ist, so dass das Messrohr im Bereich des Messabschnitts auch einen Teil mit einem rechteckigen Querschnitt hat, im Bereich des Messabschnitts gibt es also gleichsam ein "äußeres" Messrohr, zylindrisch, mit einem kreisförmigen Querschnitt, und ein "inneres" Messrohr mit einem rechteckigen Querschnitt, wobei im Bereich des "inneren" Messrohres der Messabschnitt realisiert ist und wobei ein Messfluid im Bereich des Messabschnitts nur innerhalb des "inneren" Messrohres strömt, dass die Magnetspule bzw. Magnetspulen außerhalb des Messrohres angeordnet ist bzw. sind, dass der Spulenkern bzw. die Spulenkerne in ein magnetisches Verbindungselement bzw. in magnetische Verbindungselemente übergeht bzw. übergehen, dass das "äußere" Messrohr eine Ausnehmung bzw. Ausnehmungen aufweist durch die das magnetische Verbindungselement bzw. die magnetischen Verbindungselemente in das Innere des "äußeren" Messrohres hineinragt bzw. hineinragen und dass die Jochelemente mit dem magnetischen Verbindungselement bzw. den magnetischen Verbindungselementen magnetisch verbunden sind.

Der Spulenkern der Magnetspule ist bzw. die Spulenkerne der Magnetspulen sind in Bezug auf den magnetischen Fluss mit mindestens zwei Jochelementen bzw. die Spulenkerne der Magnetspulen mit mindestens jeweils einem Jochelement kontaktiert. Die Jochelemente begrenzen zumindest teilweise den Messabschnitt des Messrohres. Das "Begrenzen des Messabschnitts des Messrohres" kann insbesondere bedeuten, dass der Messabschnitt des Messrohres zumindest teilweise durch die mit dem Spulenkern der Magnetspule bzw. den Spulenkernen der Magnetspulen magnetisch leitend verbundenen Jochelemente gebildet ist.

Während bei dem magnetisch-induktiven Durchflussmessgerät, das durch die DE 10 2006 060 442 A1 bekannt ist, die gesamte Magnetfelderzeugungseinrichtung außerhalb des Messrohres, und zwar außerhalb des Messabschnitts des Messrohres realisiert ist, können bei dem erfindungsgemäßen magnetisch-induktiven Durchflussmessgerät die mit dem Spulenkern der Magnetspule bzw. die mit den Spulenkernen der Magnetspulen in Bezug auf den magnetischen Fluss kontaktierten Jochelemente zumindest teilweise den Messabschnitt des Messrohres bilden.

Der Erläuterung bedarf, was im Rahmen der Erfindung mit "Messrohr" und mit "Messabschnitt des Messrohres" gemeint sein soll.

Mit "Messrohr" ist das Bauteil des in Rede stehenden magnetisch-induktiven Durchflussmessgerätes gemeint, durch das - von einem Messrohreintritt bis zu einem Messrohraustritt -das Messfluid strömt, dessen Durchfluss gemessen werden soll. Der "Messabschnitt des Messrohres" ist ein Abschnitt des Messrohres, der - in Strömungsrichtung des strömenden Messfluids gesehen - hinter dem Messrohreintritt und vor dem Messrohraustritt liegt und in dem die Durchflussmessung erfolgt, das heißt das erzeugte Magnetfeld auf das strömende Messfluid einwirkt und dadurch im strömenden Messfluid die Ladungstrennung erfolgt und daraus eine elektrische Potentialdifferenz entsteht, die als Messspannung abgegriffen und ausgewertet werden kann.

Der "Messabschnitt des Messrohres" kann ganz einfach ein Abschnitt des Messrohres sein, wie zuvor räumlich und funktional erläutert. Der "Messabschnitt des Messrohres" kann aber auch ein geometrisch-räumlich besonders gestalteter Abschnitt des Messrohres sein. Insbesondere kann der "Messabschnitt des Messrohres" dadurch gebildet sein, dass das Messrohr im Bereich des Messabschnitts beidseitig abgeflacht ist, der "Messabschnitt des Messrohres" also ein Rechteck oder ein Rechteck mit abgerundeten Ecken sein kann. Nicht selten sind bei magnetisch-induktiven Durchflussmessgeräten die Magnetspulen nicht in der Nähe bzw. im Bereich der Elektroden vorgesehen, sondern um 90° gegenüber den Elektroden versetzt. Bei dem erfindungsgemäßen magnetisch-induktiven Durchflussmessgerät bietet es sich jedoch an, die Magnetspulen in der Nähe der Elektroden anzuordnen.

Bei dem erfindungsgemäßen magnetisch-induktiven Durchflussmessrohr hat der Messabschnitt des Messrohres, also das "innere" Messrohr, einen im Wesentlichen rechteckigen Querschnitt, weist also zwei Längsseiten und zwei Schmalseiten bzw. Querseiten auf.

Erfindungsgemäß ist die Magnetspule bzw. sind die Magnetspulen außerhalb des Messrohres, und zwar außerhalb des "äußeren" Messrohres angeordnet. Das empfiehlt sich, weil dann anfänglich die Montage besonders einfach und eine zum Beispiel reparaturbedingte Demontage besonders einfach ausgeführt werden kann.

Wie bereits ausgeführt, erfordert in der Regel ein magnetisch-induktives Durchflussmessgerät einer bestimmten Größe auch ein Magnetfeld mit einer bestimmten Feldstärke. Die Feldstärke ergibt sich einerseits aus der Größe der Magnetspule bzw. der Magnetspulen, andererseits aus der Bestromung. Unter Berücksichtigung der Tatsache, dass ein geringer Bauraum angestrebt wird, kann es empfehlenswert sein, die Magnetfelderzeugungseinrichtung mit insgesamt vier Magnetspulen zu versehen.

Nachfolgend wird das erfindungsgemäße magnetisch-induktive Durchflussmessgerät weiter beschrieben. Das erfindungsgemäße magnetisch-induktive Durchflussmessgerät ist zusätzlich zu bisher beschriebenen Maßnahmen dadurch gekennzeichnet, dass zwischen dem Spulenkern der Magnetspule bzw. zwischen jedem Spulenkern jeder Magnetspule jeweils ein magnetisches Verbindungselement vorgesehen ist. Zudem ist das Messrohr mit einer Ausnehmung bzw. mit Ausnehmungen versehen und ist das magnetische Verbindungselement bzw. sind die magnetischen Verbindungselemente durch die Ausnehmung bzw. durch die Ausnehmungen hindurchgeführt..

Was mit den zuletzt beschriebenen Maßnahmen erreicht ist und welche Vorteile die Realisierung dieser Maßnahmen bringt und inwiefern bei dem erfindungsgemäßen magnetisch-induktiven Messgerät weitere Maßnahmen vorteilhafterweise realisiert werden können, wird noch erläutert. Im Einzelnen gibt es eine Vielzahl von Möglichkeiten, das erfindungsgemäße magnetisch-induktive Durchflussmessgerät auszugestalten und weiterzubilden. Dazu wird verwiesen auf die dem Patentanspruch 1 nachgeordneten Patentansprüche sowie auf die Beschreibung von bevorzugten Ausführungsbeispielen in Verbindung mit der Zeichnung. In der Zeichnung zeigen
- Fig. 1: ein Schnitt durch eine schematische Darstellung eines magnetisch-in-duktiven Durchflussmessgeräts mit einem vergrößerten Detail,
- Fig. 2: in einer räumlichen Darstellung, ein Detail einer zu einem erfindungs-gemäßen magnetisch-induktiven Durchflussmessgerät gehörenden Magnetfelderzeugungseinrichtung,
- Fig. 3: in einer räumlichen Darstellung, einen Teil eines erfindungsgemäßen magnetisch-induktiven Durchflussmessgeräts und
- Fig. 4: in einer räumlichen Darstellung, sehr schematisch, ein magnetisch-in-duktives Durchflussmessgerät.

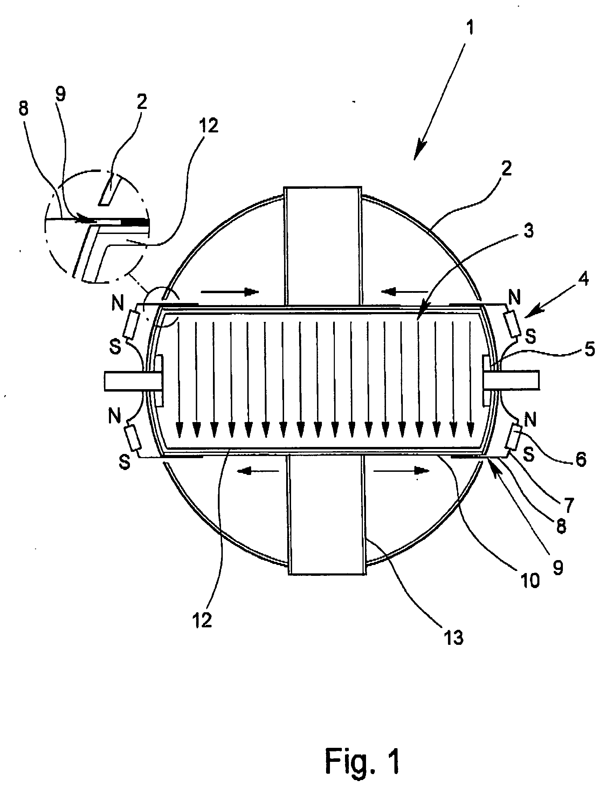

Die Fig. 1 zeigt, schematisch dargestellt, einen Schnitt durch ein magnetisch-induktives Durchflussmessgerät 1 mit einem zylindrischen, einen kreisförmigen Querschnitt aufweisenden Messrohr 2. Ein Teil des Messrohres 2, in Strömungsrichtung des Messfluids gesehen, üblicherweise in der Mitte des Messrohres 2, jedenfalls im mittleren Bereich des Messrohres 2, ist ein Messabschnitt 3 realisiert. Der Messabschnitt 3 hat im dargestellten Ausführungsbeispiel im Wesentlichen einen rechteckigen Querschnitt, wobei die kurzen Seiten nicht gerade sind, vielmehr, als Teil des Messrohres 2 mit kreisförmigem Querschnitt, kreisbogenförmig ausgeführt sind.

Im dargestellten Ausführungsbeispiel ist das Messrohr 2 einerseits geometrisch-räumlich, andererseits funktional zu betrachten. Geometrisch-räumlich betrachtet hat das Messrohr 2, beginnend mit dem Messrohreintritt und endend mit dem Messrohraustritt, durchgehend einen kreisförmigen Querschnitt. Funktional betrachtet weist das Messrohr 2 jedoch eine im Messabschnitt 3 realisierende Querschnittsverengung auf. Diese Querschnittsverengung führt zu einer Erhöhung der Geschwindigkeit des strömenden Messfluids und damit zu einer Erhöhung der Messspannung bei im Übrigen gleichen Verhältnissen.

Zu dem - in den Figuren nur schematisch dargestellten - magnetisch-induktiven Durchflussmessgerät gehört funktionsnotwendig eine Magnetfelderzeugungseinrichtung 4, die ein periodisch wechselndes Magnetfeld erzeugt. An den kurzen Seiten des im Wesentlichen rechteckigen Messabschnitts 3 des Messrohres 2 sind zwei Elektroden 5 angebracht, die im direkten Kontakt mit dem - nicht dargestellten - Messfluid stehen und die dem Abgriff einer induzierten Spannung dienen.

Die Magnetfelderzeugungseinrichtung 4 weist vier Magnetspulen 6 auf, deren Spulenkerne 7 in magnetische Verbindungselemente 8 übergehen; die Spulenkerne 7 und die magnetischen Verbindungselemente 8 sind also im dargestellten Ausführungsbeispiel Bauteile der Magnetfelderzeugungseinrichtung 4, die einerseits, innerhalb der Magnetspulen 6, die Spulenkerne 7, und andererseits die magnetischen Verbindungselemente 8 realisieren. Dabei weisen sowohl die Spulenkerne 7 als auch die magnetischen Verbindungselemente 8 bzw., im dargestellten Ausführungsbeispiel, die die Spulenkerne 7 und die magnetischen Verbindungselemente 8 realisierenden Bauteile eine hohe magnetische Permeabilität auf. Denkbar sind aber auch Ausführungsformen, bei denen die Spulenkerne 7 einerseits und die ersten Jochelemente andererseits zunächst getrennte Bauteile sind, die dann miteinander verbunden werden, und zwar so verbunden werden, dass sie funktional wie ein Bauteil wirken, insbesondere also insgesamt eine hohe magnetische Permeabilität verwirklicht ist. Bei getrennter Ausführung der Spulenkerne 7 und der magnetischen Verbindungselemente 8 müssen also die Spulenkerne 7 und die magnetischen Verbindungselemente 8 so miteinander verbunden sein, dass zwischen ihnen ein möglichst geringer magnetischer Widerstand besteht.

Dass auch im Bereich des Messabschnitts 3 geometrisch-räumlich durchgehend zylindrisch mit kreisförmigem Querschnitt ausgeführte Messrohr 2 weist vier Ausnehmungen 9 auf, durch die, wie in Fig. 1 gezeigt, die magnetischen Verbindungselemente 8 in das Innere des "äußeren" Messrohres 1 hineinragen.

Wie ausgeführt, ist das Messrohr 2 auch im Bereich des Messabschnitts 3 zunächst geometrisch-räumlich genau so ausgeführt, wie außerhalb des Messabschnitts 3. Im Übrigen ist aber das Messrohr 2 im Bereich des Messabschnitts 3 funktional so ausgeführt, wie weiter oben beschrieben, nämlich mit einer Querschnittsverengung, so dass das Messrohr 2 im Bereich des Messabschnitts 3 auch einen Teil mit einem rechteckigen Querschnitt hat. Im Bereich des Messabschnitts 3 gibt es also gleichsam ein "äußeres" Messrohr 2, zylindrisch, mit einem kreisförmigen Querschnitt, und ein "inneres" Messrohr 2 mit einem rechteckigen Querschnitt, wobei im Bereich des "inneren" Messrohres 2 der Messabschnitt 3 realisiert ist.

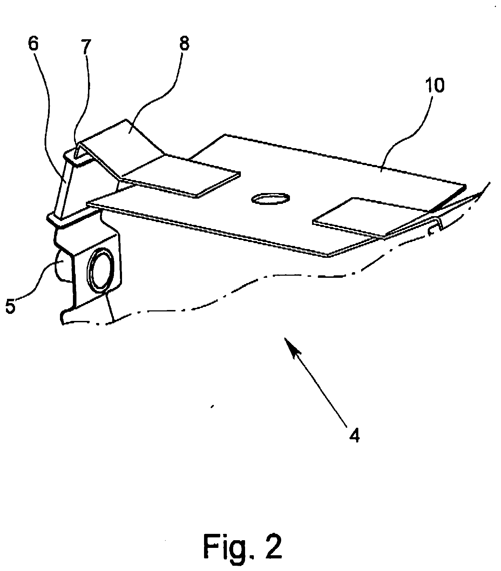

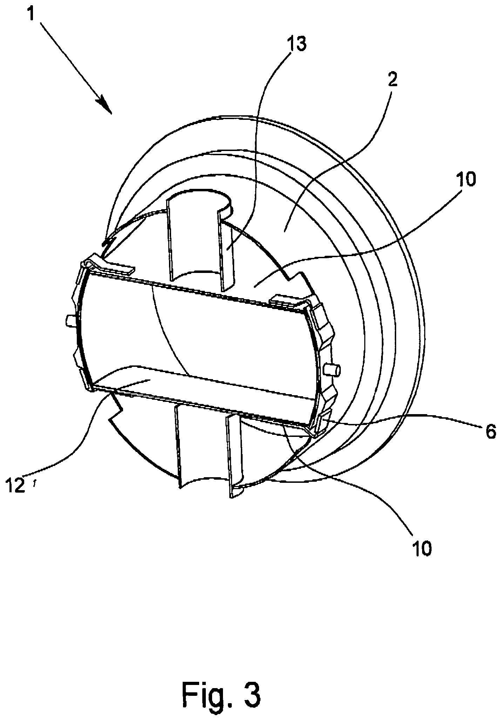

Wie die Fig. 1 und 2 im Einzelnen zeigen, ansatzweise auch die Fig. 3 zeigt, sind die Spulenkerne 7 der Magnetspulen 6 in Bezug auf den magnetischen Fluss mit Jochelementen 10 verbunden, und zwar mit Jochelementen 19, die, wie die Spulenkerne 7, eine hohe magnetische Permeabilität aufweisen. Da im dargestellten Ausführungsbeispiel sich an die Spulenkerne der Magnetspulen 6 zunächst magnetische Verbindungselemente 8 anschließen, sind im Ausführungsbeispiel die Jochelemente 10 mit den magnetischen Verbindungselementen 8 "magnetisch" verbunden, das heißt im Übergang zwischen den magnetischen Verbindungselementen und den Jochelementen ist wiederum ein möglichst geringer magnetischer Widerstand verwirklicht.

Wie die Fig. 1 und 3 zeigen, begrenzen die Jochelement 10 den Messabschnitt 3 des Messrohres 2. Das Begrenzen des Messabschnitts 3 des Messrohres 2 kann bedeuten, dass der Messabschnitt 3 des Messrohres 2 teilweise durch die - über die magnetischen Verbindungselemente 8 - mit den Spulenkernen 7 der Magnetspulen magnetisch leitenden Jochelemente 10 gebildet ist. Bei dieser Ausführungsform sind die Jochelemente 10 ein Teil des im Bereich des Messabschnitts 3 verwirklichten "inneren" Messrohres 2. Im dargestellten Ausführungsbeispiel ist jedoch das "innere" Messrohr 2 durchgehend vorhanden, es ist also nicht, was durchaus vorteilhaft realisiert sein kann, teilweise durch die Jochelemente 10 gebildet. Im Bereich der Längsseiten des "inneren" Messrohres 1 bildet das "innere" Messrohr 2 Trägerelemente 11 für die Jochelemente 10.

Im dargestellten Ausführungsbeispiel eines erfindungsgemäßen magnetisch induktiven Durchflussmessgerätes ist das Messrohr 2, und zwar sowohl das "äußere" Messrohr 2 als auch das "innere" Messrohr 2 (im Bereich des Messabschnitts 3) mit einer Innenauskleidung 12 versehen die Schutz gegenüber einem Messfluid gewährt, das aggressiv oder abrasiv sein kann.

Das vergrößerte Detail in der Fig. 1 lässt gut erkennen, dass im Ausführungsbeispiel das Messrohr 2 mit Ausnehmungen 9 versehen ist, konkret ist natürlich nur eine Ausnehmung 9 zu sehen, dass durch die Ausnehmung 9 das magnetische Verbindungselement 8 ragt, wobei das magnetische Verbindungselement 8 entweder magnetisch gut leitend mit dem Spulenkern 7 einer Magnetspule 6 verbunden ist oder das magnetische Verbindungselement 8 und der Spulenkern 7 ein Bauteil mit hoher magnetischer Permeabilität ist. Mit dem magnetischen Verbindungselement 8 ist - magnetisch gut leitend - das Jochelement 10 verbunden, das auf dem "inneren" Messrohr 2 im Bereich des Messabschnitts 3, das "innere" Messrohr 2 dort als Trägereinheit 11 ausgebildet, aufliegt.

Im Ausführungsbeispiel befinden sich die Magnetspulen 6 außerhalb des Messrohres 2, und zwar sowohl außerhalb des "inneren" Messrohres 2 als auch außerhalb des "äußeren" Messrohres 2. Das für ein magnetisch-induktives Durchflussmessgerät erforderliche Magnetfeld lässt sich durch die Bestromung der Magnetspulen 6 einstellen bzw. steuern. Die Bestromung ist dabei davon abhängig, wie viele und welche Arten von Magnetspulen 6 vorgesehen sind und welche Stärke das Magnetfeld im Messabschnitt 3 haben soll.

Wie die Fig. 1 zeigt, sind bei dem in Rede stehenden magnetisch-induktiven Durchflussmessgerät vier Magnetspulen vorgesehen; auf jeder Schmalseite des Messabschnitts 3 sind jeweils zwei Magnetspulen 6 vorgesehen, und zwar außerhalb des "inneren" Messrohres 2 und auch außerhalb des "äußeren" Messrohres 2. Es ist jedoch auch möglich, aber nicht erfindungsgemäß, die Magnetspulen 6 zwar außerhalb des "inneren" Messrohres 2, aber innerhalb des "äußeren" Messrohres 2 vorzusehen, weil in dem Raum zwischen dem "äußeren" Messrohr 2 und dem "inneren" Messrohr 2 das Messfluid ja nicht strömt, dies vielmehr im Bereich des Messabschnitts 3 nur innerhalb des "inneren" Messrohres 2 strömt. Die Anordnung der Magnetspulen 6 außerhalb des "äußeren" Messrohres 2 hat den Vorteil der besonders einfachen Montage und des besonders einfachen Austausches, wenn das erforderlich sein sollte.

Die Fig. 2 zeigt noch im Detail einen Teil der zu einem erfindungsgemäßen magnetisch-induktiven Durchflussmessgerät 1 gehörenden Magnetfelderzeugungseinrichtung 4. Man sieht ohne Weiteres eine Magnetspule 6, deren Spulenkern 7, das sich an den Spulenkern 7 anschließende magnetische Verbindungselement 8, einstückig mit dem Spulenkern 7 verbunden, und das Jochelement 10.

Im Übrigen gilt für das dargestellte Ausführungsbeispiel eines erfindungsgemäßen magnetisch-induktiven Durchflussmessgeräts, dass die beiden Elektroden 5 jeweils an den Schmalseiten des "inneren" Messrohres 2 bzw. an den Schmalseiten des Messabschnitts 3 angeordnet sind.

Im Einzelnen nicht dargestellt ist, dass die Spulenkerne 7, die magnetischen Verbindungselemente 8 oder / und die Jochelemente 10, um Wirbelströme möglichst gering zu halten bzw. zu vermeiden, geschichtet ausgeführt sein können, die einzelnen Schichten natürlich elektrisch gegeneinander isoliert sind.

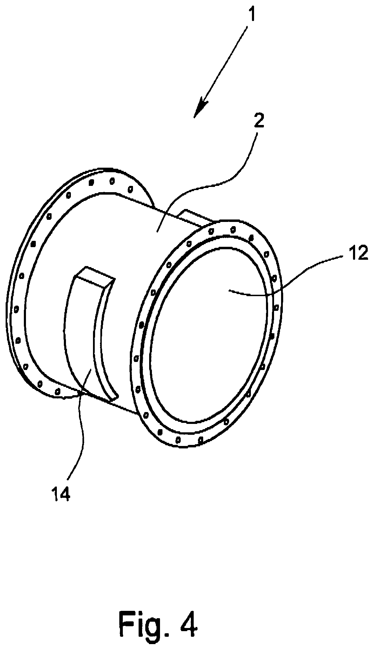

Für das dargestellte Ausführungsbeispiel eines erfindungsgemäßen magnetisch-induktiven Durchflussmessgerätes 1 gilt weiter, dass auf jeder Längsseite des Messabschnitts 3 zwischen dem "äußeren" Messrohr 2 und dem "inneren" Messrohr 2 ein Abstützelement 13 vorgesehen ist, und dass, wie die Fig. 4 zeigt, im Bereich der Elektroden 5 und der Magnetspulen 6 ein von Außen auf das Messrohr 2 aufgebrachtes Abdeckelement 14 vorgesehen ist.

Für das dargestellte Ausführungsbeispiel eines erfindungsgemäßen magnetisch-induktiven Durchflussmessgeräts 1 gilt, dass auf jeder Längsseite des "inneren" Messrohres 2, also auf jeder Längsseite des im Wesentlichen mit rechteckigem Querschnitt ausgeführten Messabschnitts 3, nur ein Jochelement 10 vorgesehen ist, das an seinen beiden Schmalseiten jeweils mit einem magnetischen Verbindungselement 8 magnetisch gut leitend verbunden ist. Dabei funktioniert dann die Magnetfelderzeugungseinrichtung 4 nur dann, wenn die - über die Spulenkerne 7 und die magnetischen Verbindungselemente 8 mit dem Jochelement 10 magnetisch verbundenen Magnetspulen 6 gleichgerichtete Magnetfelder erzeugen. In der Figur sind die Nordpole der einzelnen Magnetspulen jeweils mit einem "N", die Südpole jeweils mit einem "S" gekennzeichnet.

Ist auch eine Ausführungsform magnetisch-induktiver Durchflussmessgeräte 1 mit nur einem Jochelement 10 auf einer Längsseite des Messabschnitts 3 und nur einem weiteren Jochelement 10 auf der anderen Längsseite des Messabschnitts 3 ohne Weiteres möglich, kann man jedoch auch auf jeder Längsseite des Messabschnitts 3 zwei Jochelemente 10 vorsehen. Dabei sind dann die beiden auf einer Seite des Messabschnitts 3 vorgesehenen Jochelemente 10 durch einen Spalt getrennt.

Der Fig. 2 kann entnommen werden, dass im Ausführungsbeispiel die Magnetspulen 6 und insbesondere deren Windungen flach ausgeführt sind, um den Raum, der von den Magnetspulen 6 eingenommen wird, möglichst klein zu halten.

Wie wiederum insbesondere der Fig. 2 entnommen werden kann, sind die Jochelemente 10 wesentlich breiter als die magnetischen Verbindungselemente 8 und die Spulenkerne 7 ausgeführt. Dadurch wird in Strömungsrichtung des Messfluids das funktionswendige Magnetfeld "verlängert".

## Patentansprüche

1. Magnetisch-induktives Durchflussmessgerät (1) mit mindestens einem Messrohr (2), wobei das Messrohr (2) mindestens einen Messabschnitt (3) aufweist, mit mindestens einer Magnetfelderzeugungseinrichtung (4) zum Erzeugen eines Magnetfeldes im Messabschnitt (3) des Messrohres (2), und mit wenigstens zwei im Messabschnitt (3) des Messrohres (2) angeordneten Elektroden (5) zur Erfassung einer Messspannung, wobei die Magnetfelderzeugungseinrichtung (4) mindestens eine vorzugsweise außerhalb des Messabschnitts (3) des Messrohres (2) angeordnete Magnetspule (6) mit einem Spulenkern (7) und mindestens zwei Jochelemente (10) sowie mindestens ein magnetisches Verbindungselement (8) aufweist, wobei der Spulenkern (7) der Magnetspule (6) bzw. die Spulenkerne (7) der Magnetspulen (6) in Bezug auf den magnetischen Fluss mit den mindestens zwei Jochelementen (10) bzw. die Spulenkerne (7) der Magnetspulen (6) mit den mindestens jeweils zwei Jochelementen (10) kontaktiert ist bzw. sind und dass die Jochelemente (10) zumindest teilweise den Messabschnitt (3) des Messrohres (2) begrenzen,
**dadurch gekennzeichnet,**
**dass** das Messrohr (2) im Bereich des Messabschnitts (3) mit einer Querschnittsverengung ausgeführt ist, so dass das Messrohr (2) im Bereich des Messabschnitts (3) auch einen Teil mit einem rechteckigen Querschnitt hat, im Bereich des Messabschnitts (3) gibt es also gleichsam ein "äußeres" Messrohr (2), zylindrisch, mit einem kreisförmigen Querschnitt, und ein "inneres" Messrohr (2) mit einem rechteckigen Querschnitt, wobei im Bereich des "inneren" Messrohres (2) der Messabschnitt (3) realisiert ist und wobei ein Messfluid im Bereich des Messabschnitts (3) nur innerhalb des "inneren" Messrohres (2) strömt, dass die Magnetspule (6) bzw. Magnetspulen (6) außerhalb des Messrohres (2) angeordnet ist bzw. sind, dass der Spulenkern (7) bzw. die Spulenkerne (7) in das magnetische Verbindungselement (8) bzw. in die magnetischen Verbindungselemente (8) übergeht bzw. übergehen, dass das "äußere" Messrohr (2) eine Ausnehmung (9) bzw. Ausnehmungen (9) aufweist durch die das magnetische Verbindungselement (8) bzw. die magnetischen Verbindungselemente (8) in das Innere des "äußeren" Messrohres (2) hineinragt bzw. hineinragen und dass die Jochelemente (10) mit dem magnetischen Verbindungselement (8) bzw. den magnetischen Verbindungselementen (8) magnetisch verbunden sind.

2. Magnetisch-induktives Durchflussmessgerät nach Anspruch 1, **dadurch gekennzeichnet, dass** die Magnetfelderzeugungseinrichtung (4) vier Magnetspulen (6) aufweist.

3. Magnetisch-induktives Durchflussmessgerät nach Anspruch 1 oder 2, **dadurch gekennzeichnet, dass** vier Jochelemente (10) vorgesehen sind, nämlich zwei Jochelemente (10) auf jeder Längsseite des Messabschnitts (3) des Messrohres (2), und dass zwischen den auf einer Längsseite des Messabschnitts (3) des Messrohres (2) vorgesehenen Jochelementen (10) ein magnetischer Spalt realisiert ist.

4. Magnetisch-induktives Durchflussmessgerät nach einem der Ansprüche 1 bis 3, **dadurch gekennzeichnet, dass** das Messrohr (2) eine Innenauskleidung (12) aufweist.

5. Magnetisch-induktives Durchflussmessgerät nach einem der Ansprüche 1 bis 4, **dadurch gekennzeichnet, dass** auf der Außenseite des Messrohres (2) ein Abdeckelement (14) zum Abdecken der Elektroden (5), der Magnetspulen (6), der Spulenkerne (7) und teilweise der magnetischen Verbindungselemente (8) vorgesehen ist.

## Claims

1. Magnetic-inductive flowmeter (1) having at least one measuring tube (2), wherein the measuring tube (2) has at least one measuring section (3), having at least one magnetic field generating device (4) for generating a magnetic field in the measuring section (3) of the measuring tube (2) and with at least two electrodes (5) arranged in the measuring section (3) of the measuring tube (2) for capturing a measuring voltage, wherein the magnetic field generating device (4) has at least one magnet coil (6) preferably arranged outside the measuring section (3) of the measuring tube (2) and having a coil core (7) and at least two yoke elements (10) as well as at least one magnetic connection element (8), wherein the coil core (7) of the magnet coil (6) or the coil cores (7) of the magnet coils (6) is or are in contact with the at least two yoke elements (10), or the coil cores (7) of the magnet coils (6) are in contact with the at least two yoke elements (10) in each case, with respect to the magnetic flux, and that the yoke elements (10) at least partially enclose the measuring section (3) of the measuring tube (2),
**characterized in**
**that** the measuring tube (2) is configured with a cross-sectional constriction in the area of the measuring section (3), so that the measuring tube (2) also has a part with a rectangular cross-section in the area of the measuring section (3), thus, in the area of the measuring section (3) there is, as it were, an "outer" measuring tube (2), cylindrically with a circular cross-section, and an "inner" measuring tube (2) with a rectangular cross-section, wherein the measuring section (3) is implemented in the region of the "inner" measuring tube (2) and wherein a measuring fluid in the region of the measuring section (3) flows only within the "inner" measuring tube (2), that the magnet coil (6) or coils (6) is or are arranged outside the measuring tube (2), that the coil core (7) or cores (7) merges or merge into the magnetic connection element or elements (8), that the "outer" measuring tube (2) has a recess (9) or recesses (9) through which the magnetic connection element (8) or the magnetic connection elements (8) projects or project into the interior of the "outer" measuring tube (2), and that the yoke elements (10) are magnetically connected to the magnetic connection element (8) or the magnetic connection elements (8).

2. Magnetic-inductive flowmeter according to claim 1, **characterized in that** the magnetic field generating device (4) comprises four magnetic coils (6).

3. Magnetic-inductive flowmeter according to claim 1 or 2, **characterized in that** four yoke elements (10) are provided, namely two yoke elements (10) on each longitudinal side of the measuring section (3) of the measuring tube (2), and that a magnetic gap is implemented between the yoke elements (10) provided on one longitudinal side of the measuring section (3) of the measuring tube (2).

4. Magnetic-inductive flowmeter according to any one of claims 1 to 3, **characterized in that** the measuring tube (2) has an inner lining (12).

5. Magnetic-inductive flowmeter according to any one of claims 1 to 4, **characterized in that** a cover element (14) is provided on the outside of the measuring tube (2) for covering the electrodes (5), the magnetic coils (6), the coil cores (7) and, in part, the magnetic connection elements (8).

## Revendications

1. Débitmètre magnéto-inductif (1) comprenant au moins un tube de mesure (2), le tube de mesure (2) étant pourvu d'au moins une portion de mesure (3), au moins un dispositif de génération de champ magnétique (4) destiné à générer un champ magnétique dans la portion de mesure (3) du tube de mesure (2), et au moins deux électrodes (5) disposées dans la portion de mesure (3) du tube de mesure (2) et destinées à détecter une tension de mesure, le dispositif de génération de champ magnétique (4) comportant au moins une bobine magnétique (6) disposée de préférence à l'extérieur de la portion de mesure (3) du tube de mesure (2) et pourvue d'un noyau de bobine (7) et au moins deux éléments de culasse (10) et au moins un élément de liaison magnétique (8), le noyau de bobine (7) de la bobine magnétique (6) ou les noyaux de bobine (7) des bobines magnétiques (6) étant en contact en termes de flux magnétique avec les au moins deux éléments de culasse (10) ou les noyaux de bobine (7) des bobines magnétiques (6) étant en contact avec les au moins deux éléments de culasse (10) et les éléments de culasse (10) délimitant au moins partiellement la portion de mesure (3) du tube de mesure (2), **caractérisé en ce que** le tube de mesure (2) est conçu avec un rétrécissement de section transversale au niveau de la portion de mesure (3) de sorte que le tube de mesure (2) comporte au niveau de la portion de mesure (3) également une partie à section transversale rectangulaire, ce qui revient à former au niveau de la portion de mesure (3) un tube de mesure « extérieur » (2), cylindrique, à section transversale circulaire, et un tube de mesure « intérieur » (2) à section transversale rectangulaire, la portion de mesure (3) étant réalisée au niveau du tube de mesure « intérieur » (2) et un fluide de mesure s'écoulant au niveau de la portion de mesure (3) uniquement à l'intérieur du tube de mesure « intérieur » (2), **en ce que** la bobine magnétique (6) ou les bobines magnétiques (6) sont disposées à l'extérieur du tube de mesure (2), **en ce que** le noyau de bobine (7) ou les noyaux de bobine (7) se transforment en l'élément de liaison magnétique (8), respectivement les éléments de liaison magnétiques (8), **en ce que** le tube de mesure « extérieur » (2) comporte un évidement (9) ou des évidements (9) à travers lesquels l'élément de liaison magnétique (8), respectivement les éléments de liaison magnétiques (8), font saillie à l'intérieur du tube de mesure « extérieur » (2) et **en ce que** les éléments de culasse (10) sont reliés magnétiquement à l'élément de liaison magnétique (8), respectivement les éléments de liaison magnétiques (8).

2. Débitmètre magnéto-inductif selon la revendication 1, **caractérisé en ce que** le dispositif de génération de champ magnétique (4) comporte quatre bobines magnétiques (6).

3. Débitmètre magnéto-inductif selon la revendication 1 ou 2, **caractérisé en ce que** quatre éléments de culasse (10) sont prévus, à savoir deux éléments de culasse (10) sur chaque côté longitudinal de la portion de mesure (3) du tube de mesure (2), et **en ce qu'**un entrefer magnétique est réalisé entre les éléments de culasse (10) prévus sur un côté longitudinal de la portion de mesure (3) du tube de mesure (2).

4. Débitmètre magnéto-inductif selon l'une des revendications 1 à 3, **caractérisé en ce que** le tube de mesure (2) comporte un revêtement intérieur (12).

5. Débitmètre magnéto-inductif selon l'une des revendications 1 à 4, **caractérisé en ce qu'**un élément de recouvrement (14) destiné à recouvrir les électrodes (5), les bobines magnétiques (6), les noyaux de bobine (7) et partiellement les éléments de liaison magnétiques (8) est prévu sur le côté extérieur du tube de mesure (2).
